(19)

**Europäisches Patentamt**
**European Patent Office**
**Office européen des brevets**

(11)  **EP 4 696 550 A1**

(12) **EUROPEAN PATENT APPLICATION**
published in accordance with Art. 153(4) EPC

(43) Date of publication:
**18.02.2026  Bulletin 2026/08**

(21) Application number: **23932640.8**

(22) Date of filing: **30.06.2023**

(51) International Patent Classification (IPC):
**B60L 58/22** (2019.01)

(86) International application number:
**PCT/CN2023/104466**

(87) International publication number:
**WO 2024/212365 (17.10.2024 Gazette 2024/42)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **14.04.2023  CN 202310398980**

(71) Applicant: **United Automotive Electronic Systems
Co., Ltd.
Pudong New Area
Shanghai 201206 (CN)**

(72) Inventors:
• **YANG, Zhifei
Shanghai 201206 (CN)**

• **KE, Xichun
Shanghai 201206 (CN)**
• **LIU, Chuang
Shanghai 201206 (CN)**
• **LU, Weijia
Shanghai 201206 (CN)**
• **ZHANG, Xiaodong
Shanghai 201206 (CN)**
• **DI, Xiang
Shanghai 201206 (CN)**

(74) Representative: **Penza, Giancarlo
Bugnion S.p.A.
Viale Lancetti, 17
20158 Milano (IT)**

(54) **METHOD AND APPARATUS FOR BATTERY EQUALIZATION BASED ON REINFORCEMENT LEARNING**

(57)    The present invention provides a reinforcement learning-based battery equalization method, comprising: establishing a physical field model of a battery control board as a simulation environment for battery equalization, wherein the physical field model comprises system parameters to be identified; collecting experimental data of the battery control board, and identifying and determining the system parameters in the physical field model based on the experimental data; and training a neural network by interacting with the simulation environment based on a reinforcement learning algorithm, in combination with a greedy rule and a preset constraint condition, and implementing battery equalization control through the equalization control signal output by the neural network.

FIG. 3

## Description

Technical Field

The present invention relates to the field of battery equalization, and in particular, to a reinforcement learning-based battery equalization method and apparatus.

Background Art

With the popularization of electric vehicles, the capacity and lifespan of power batteries have received increasing attention. Among the various methods to enhance battery capacity and lifespan, battery equalization operates by maintaining the deviation of battery cell voltage or battery pack voltage within an expected range, thereby ensuring that each individual cell remains in the same state during normal use to avoid overcharging and over-discharging. More specifically, a battery equalization controller eliminates cell inconsistencies through discharge, thereby improving the overall capacity and lifespan of the battery.

However, due to the small discharge current and the ever-increasing capacity of power batteries, equalization efficiency has become a key challenge in achieving effective equalization with this approach. In the prior art, traditional power battery controllers often use a greedy rule to determine the switching of equalization channels. The greedy rule (greedy algorithm) refers to making the choice that seems best at the present moment when solving a problem; that is, it does not consider the overall optimum, and the algorithm obtains a local optimal solution in a certain sense. However, in the battery equalization problem, hardware constraints usually need to be considered. When hardware constraints are considered, the greedy rule suffers from the problem of long equalization time and cannot meet the growing application demands.

To overcome the aforementioned drawbacks existing in the prior art, there is an urgent need in the field for a battery equalization method that can significantly improve equalization efficiency while ensuring equalization accuracy, making it suitable for broad application.

Summary of the Invention

The following presents a simplified summary of one or more aspects to provide a basic understanding thereof. This summary is not an extensive overview of all contemplated aspects, nor is it intended to identify key or critical elements of all aspects, or to delineate the scope of any or all aspects. Its sole purpose is to present some concepts of one or more aspects in a simplified form as a prelude to the more detailed description that is presented later.

To overcome the drawbacks existing in the prior art mentioned above, the present invention provides a reinforcement learning-based battery equalization method. The method may comprise: establishing a physical field model of a battery control board as a simulation environment for battery equalization, wherein the physical field model comprises system parameters to be identified; collecting experimental data of the battery control board, and identifying and determining the system parameters in the physical field model based on the experimental data; and training a neural network by interacting with the simulation environment based on a reinforcement learning algorithm, in combination with a greedy rule and a preset constraint condition, and implementing battery equalization control through the equalization control signal output by the neural network.

In an exemplary embodiment, the process of training a neural network by interacting with the simulation environment based on a reinforcement learning algorithm, in combination with a greedy rule and a preset constraint condition, may further comprise: inputting state data in the simulation environment into the neural network, wherein the state data comprises a temperature sampling signal value and a cell balancing demand value; and outputting action data based on the greedy rule and the preset constraint condition in the simulation environment, wherein the action data comprises multi-channel switch signal used for discharging in the battery control board; and the neural network outputs a voting signal to the simulation environment based on the state data and the action data, the voting signal comprising a control signal for the multi-channel switches used for discharging in the battery control board; and taking a negative value of the total time scalar required to achieve equalization as a cumulative reward in the reinforcement learning algorithm to the neural network, circulating the above steps to train the neural network to maximize the cumulative reward, and performing battery equalization control based on the final output equalization control signal.

In an exemplary embodiment, the reinforcement learning algorithm is a PPO2 algorithm, and the neural network comprises a policy network and a value network, wherein training a neural network by interacting with the simulation environment based on a reinforcement learning algorithm, in combination with a greedy rule and a preset constraint condition, may further comprise: the policy network receives the state data of the simulation environment and returns the current control quantity, and records the result data of the interaction with the simulation environment into the experience replay buffer; the value network performs supervised learning to estimate a reward value in the current state, the reward value being a time scalar value required for battery equalization control in the current state to be negative; the policy network determines an update gradient based on an advantage estimator and an entropy bonus term, the advantage estimator to estimate an advantage of the current state by subtracting the reward value estimated by the value network from the actual return of the current control quantity, the entropy bonus term to encourage exploration of different strategies; and the weight of the policy network is updated by using a gradient descent method, and the updated control quantity and state data are fed back to the policy network, and the above steps are cycled to gradually reduce the entropy bonus term, so that the policy network converges to a deterministic policy.

In an exemplary embodiment, the process of training a neural network by interacting with the simulation environment based on a reinforcement learning algorithm, in combination with a greedy rule and a preset constraint condition, and may further comprise: performing an AND operation between the control signals of the deterministic policy finally output by the policy network and the multi-channel switch signal obtained based on the greedy rule, to determine the voting signal, wherein the AND operation comprises: in response to the greedy rule requiring a certain switch to be turned off, turning off the switch in the voting signal regardless of the control signal output by the policy network; and in response to the greedy rule requiring a certain switch to be turned on, using a control value of the switch in the control signal output by the policy network as a control value of the switch in the final equalization control signal.

In an exemplary embodiment, the greedy rule may comprise calculation of a cell remaining capacity, and the preset constraint condition may comprise temperature constraints of a thermal model of a PCB in the battery control board.

In an exemplary embodiment, the battery may comprise a plurality of groups of cells connected in series, each of said cells corresponds to a discharge channel controlled by a switch, and the preset constraint condition may further comprise: a hardware constraint ensuring that switches of adjacent discharge channels cannot be turned on simultaneously.

In an exemplary embodiment, the process of training a neural network by interacting with the simulation environment based on a reinforcement learning algorithm, in combination with a greedy rule and a preset constraint condition, may comprise: modeling the battery control board as a differential-algebraic equation model, abstracting the PCB board into a plurality of partitioned units, and assuming that parameters of said a plurality of partitioned units are isotropic; and adding constant heat sources at predetermined positions to simulate heat generation by electronic components other than discharge resistors on the battery control board.

In an exemplary embodiment, the process of establishing a physical field model of a battery control board as a simulation environment for battery equalization, and may further comprise: using Simulink/Simscape to establish the physical field model, wherein an outer-layer Simulink solver employs a fixed-step discrete solver, and an inner-layer Simscape solver employs a backward Euler solver.

In an exemplary embodiment, the process of identifying and determining the system parameters in the physical field model based on the experimental data, may comprise: fitting the experimental data by a combination of white-box calibration and a search algorithm to determine values of the system parameters.

In an exemplary embodiment, the system parameters may comprise a heat capacity coefficient, a heat conduction coefficient, a heat convection coefficient, respective lengths of the battery control board, an external heat generation amount, a mass density, and a resistor heat generation amount, the experimental data comprises experimental data of the battery control board in a constant temperature chamber, said fitting the experimental data by a combination of white-box calibration and a search algorithm to determine values of the system parameters, may comprises: except for specific parameters, writing other system parameters into the physical field model through manual measurement, wherein the specific parameters are part of the system parameters comprising the heat capacity coefficient, the heat conduction coefficient, the heat convection coefficient, the external heat generation amount, the mass density, and the length of the battery control board in a specific direction; and for the specific parameters, first providing an approximate value range of the parameters based on material properties, and then searching for parameter values that best fit the experimental data within a parameter space by a genetic algorithm, wherein the specific direction is a direction with uncertain heat distribution on the battery control board.

In an exemplary embodiment, the experimental data may further comprise experimental data of the battery control board on an actual vehicle, said identifying and determining the system parameters in the physical field model based on the experimental data, may further comprise: establishing a model of a housing of the battery control board on the actual vehicle, and selecting parameters of the housing model to be determined together with the system parameters by fitting the experimental data through white-box calibration and the search algorithm.

In an exemplary embodiment, the battery may comprise a number of $a$ groups of cells connected in series, the number of $a$ groups of cells are divided into a number of b modules with identical structures, each module is provided with ( $\frac{a}{b}$ ) discharge channels corresponding one-to-one to the cells, wherein $a$, $b$, and ( $\frac{a}{b}$ ) are positive integers; when a discharge channel is turned on, the corresponding cell discharges through a resistor connected in parallel within that discharge channel, and temperature sensors are provided on both front and rear sides at a central position of the battery control board of each of said modules.

In an exemplary embodiment, the state data may comprise a $(b \cdot c)$ - dimensional temperature vector and an $a$-dimensional equalization demand vector, wherein the $(b \cdot c)$-dimensional temperature vector comprises a number of c sets of temperature sampling signal values from the temperature sensors in the number of $b$ modules, and each equalization demand vector corresponds to an equalization demand value of one cell, the unit of the equalization demand value being Amperehour (Ah), the action data comprises Boolean values of an $a$-dimensional switch signal, representing switching of the discharge channels corresponding one-to-one to the number of $a$ groups of cells, the voting signal comprises an $\left(\dfrac{\bar{a}}{2b}\right)$-dimensional switch control signal to satisfy a hardware constraint condition ensuring that switches of adjacent discharge channels cannot be turned on simultaneously, wherein $a$, $b$, $c$, and ( $\dfrac{a}{2b}$ )are positive integers.

The present invention further provides a reinforcement learning-based battery equalization apparatus, comprises: a memory; and a processor coupled to the memory, wherein the processor is configured to execute the reinforcement learning-based battery equalization method according to any one of the preceding claims.

The present invention also provides a computer-readable medium, having stored thereon a computer program, which, when executed by a processor, implements the reinforcement learning-based battery equalization method according to any one of the preceding claims.

Brief Description of the Drawings

The above-described features and advantages of the present invention will be better understood upon reading the following detailed description of the embodiments in conjunction with the accompanying drawings. The components in the drawings are not necessarily drawn to scale, and components having similar related characteristics or features may have the same or similar reference numerals.

FIG.1 is a schematic diagram of a battery equalization circuit of a single discharge channel according to an embodiment of the present invention;
FIG.2 is a schematic diagram of an expanded view of equalization channels on a battery control board according to an embodiment of the present invention;
FIG.3 is a flowchart illustrating a reinforcement learning-based battery equalization method according to an embodiment of one aspect of the present invention;
FIG.4 and FIG.5 are schematic diagrams of a simplified model of a battery control board on two directional planes, respectively;
FIG.6 and FIG.7 are schematic diagrams of a thermal field model simulation for a single module area and the entire battery control board in Simulink, respectively;
FIG.8 is a diagram of experimentally collected data according to an embodiment of the present invention;
FIG.9 to FIG.11 are diagrams showing parameter calibration results of NTC temperature curves for three module areas of an experimental board in a constant temperature chamber according to an embodiment of the present invention;
FIG.12 to FIG.14 are diagrams showing parameter calibration results of NTC temperature curves for three module areas of a battery control board on an actual vehicle according to an embodiment of the present invention;
FIG.15 is a schematic diagram illustrating the principle of a battery equalization system according to an embodiment of the present invention;
FIG.16 is a block diagram of neural network policy training according to an embodiment of the present invention;
FIG.17 is a comparison diagram of the opening and closing of equalization channels during an equalization process between an embodiment of the present invention and the prior art;
FIG.18 is a comparison diagram of the process of required capacity versus time during an equalization process between an embodiment of the present invention and the prior art;
FIG.19 is a comparison diagram of temperature versus time during an equalization process between an embodiment of the present invention and the prior art;
FIG.20 is a schematic diagram of the total number of opened channels versus time during an equalization process between an embodiment of the present invention and the prior art;
FIG.21 is a schematic diagram of the average temperature of the thermal field during an equalization process between an embodiment of the present invention and the prior art;
FIG.22 is a schematic diagram of a reinforcement learning-based battery equalization apparatus according to an embodiment of another aspect of the present invention.

For clarity, a brief description of the reference numerals is provided below:

101 Cell
102a, 102b Resistor
103 Switch
1501 Neural Network
1502 Simulation Environment
1601 Value Network

1602 Policy Network
1603 Advantage Estimator
1604 Entropy Bonus Term
1605 Greedy Rule

Detailed Description

The following specific embodiments illustrate the implementation modes of the present invention. Those skilled in the art can easily understand other advantages and effects of the invention from the content disclosed in this specification. Although the description of the present invention will be introduced in combination with exemplary embodiments, this does not mean that the features of the invention are limited to these embodiments. On the contrary, the purpose of introducing the invention in connection with the embodiments is to cover other alternatives or modifications that may be extended based on the claims of the present invention. To provide a deep understanding of the invention, the following description will contain many specific details. The present invention may also be implemented without these details. Furthermore, some specific details will be omitted in the description to avoid obscuring or blurring the key points of the invention.

In the description of the present invention, it should be noted that unless otherwise expressly specified and defined, the terms "install", "connect", and "link" should be understood broadly. For example, it may be a fixed connection, a detachable connection, or an integral connection; it may be a mechanical connection, an electrical connection; it may be a direct connection, or an indirect connection through an intermediate medium; it may be the internal communication between two components. Those of ordinary skill in the art can understand the specific meanings of the above terms in the present invention according to the specific situation.

Furthermore, the terms "upper", "lower", "left", "right", "top", "bottom", "horizontal", and "vertical" used in the following description should be understood as the orientation depicted in the relevant paragraphs and accompanying drawings. These relative terms are used only for the convenience of description and do not mean that the described apparatus must be manufactured or operated in a specific orientation, and therefore should not be construed as limiting the invention.

It is to be understood that although terms such as "first", "second", "third", etc. may be used herein to describe various components, regions, layers and/or sections, these components, regions, layers and/or sections should not be limited by these terms. These terms are only used to distinguish one component, region, layer and/or section from another. Thus, a first component, region, layer and/or section discussed below could be termed a second component, region, layer and/or section without departing from the teachings of some embodiments of the present invention.

Battery equalization refers to maintaining the deviation of cell voltage or battery pack voltage within an expected range through appropriate discharge, thereby ensuring that each individual cell remains in the same state during normal use to avoid overcharging and over-discharging.

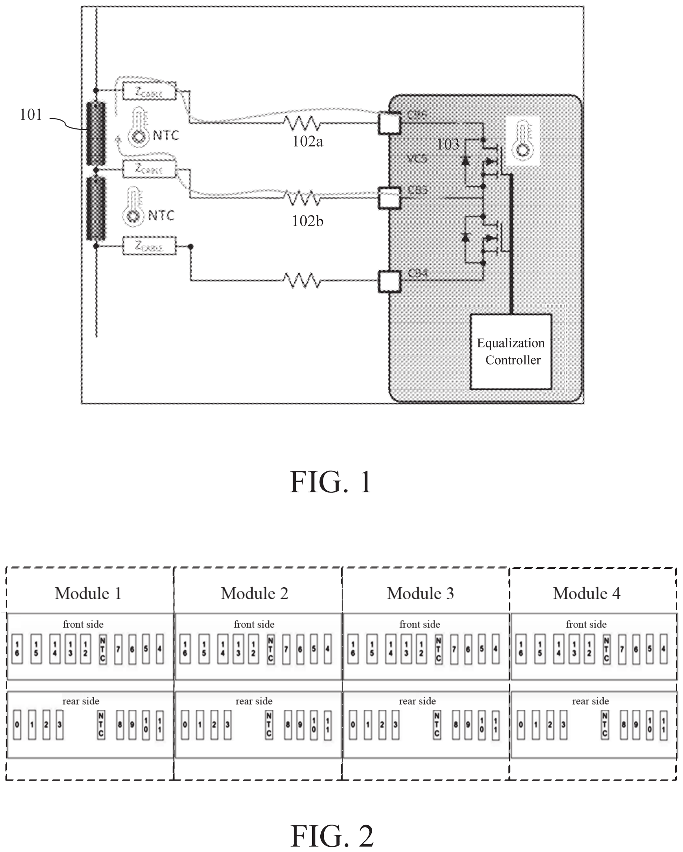

FIG.1 is a schematic diagram of a battery equalization circuit of a single discharge channel according to an embodiment of the present invention.

As shown in FIG. 1, the part indicated by the arrow is an equalization discharge channel circuit. Each channel corresponds to one cell. When a channel is turned on, the cell discharges through two columns of resistors connected in parallel within the circuit. For example, in the embodiment shown in FIG.1, the switch 103 in the equalization channel indicated by the arrow is turned on, and the cell 101 discharges through the resistors 102a and 102b.

FIG.2 is a schematic diagram of an expanded view of the equalization channels on a battery control board according to an embodiment of the present invention.

Please refer to FIG.2, in this embodiment, the power battery controlled by the experimental battery control board comprises sixty-four groups of cells connected in series. These sixty-four groups of cells are divided into four modules of identical structure, namely Module 1 to Module 4 in the figure. Therefore, each control module has sixteen equalization discharge channels. As shown in FIG.2, the numbers in the small boxes represent the indices of the resistor columns. With reference to FIG.1, equalization channel N uses resistor column N-1 and resistor column N. The NTC in FIG.2 is a thermistor functioning as a temperature sensor. Preferably, as an engineering redundancy design, an NTC may be disposed at the same position on both the front and rear sides of the control board in the length and width directions.

The following describes the battery equalization method provided by the present invention using the battery control board structure of the above-mentioned embodiments as an example.

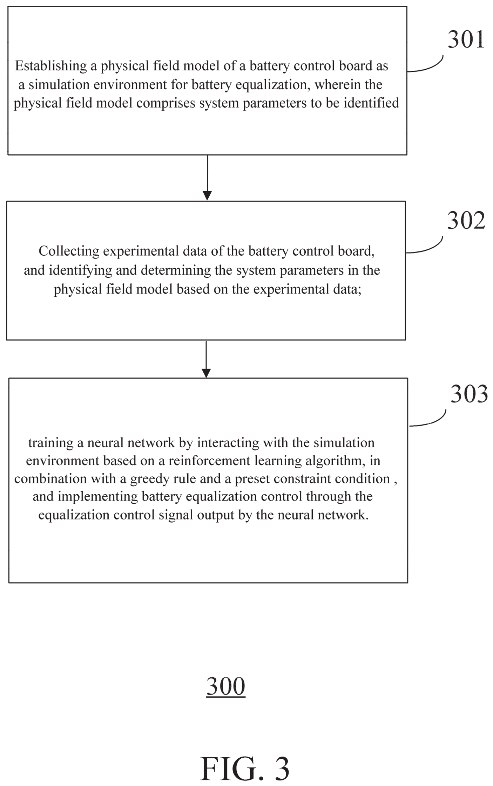

FIG. 3 is a schematic flowchart illustrating a reinforcement learning-based battery equalization method according to an embodiment of one aspect of the present invention.

Referring to FIG.3, the reinforcement learning-based battery equalization method 300 provided by the present invention may comprise:

Step 301: Establishing a physical field model of a battery control board as a simulation environment for battery equalization, wherein the physical field model comprises system parameters to be identified;

Step 302: Collecting experimental data of the battery control board, and identifying and determining the system parameters in the physical field model based on the experimental data; and

Step 303: training a neural network by interacting with the simulation environment based on a reinforcement learning algorithm, in combination with a greedy rule and a preset constraint condition, and implementing battery equalization control through the equalization control signal output by the neural network.

The following elaborates on each step.

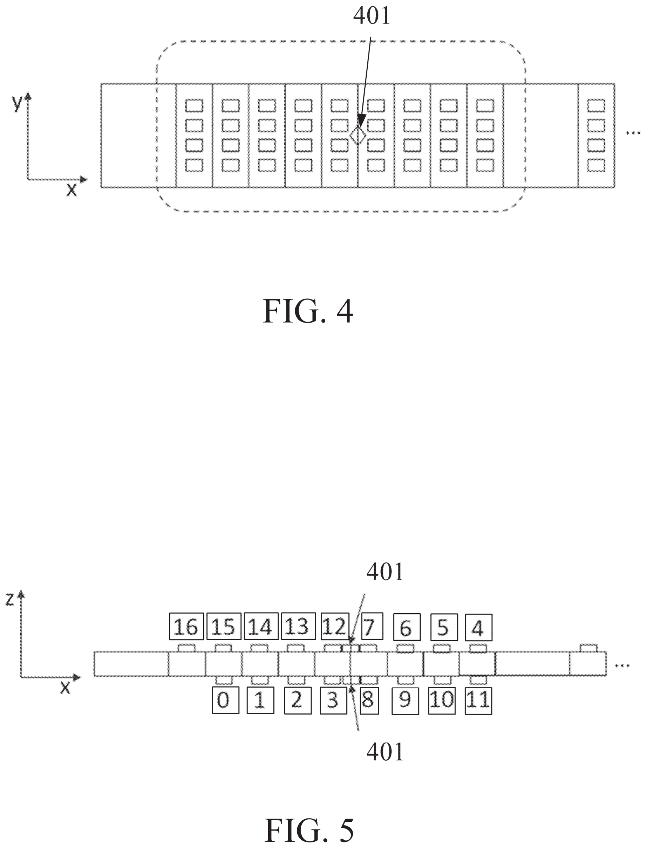

FIG.4 and FIG.5 are schematic diagrams of a simplified model of a battery control board on two directional planes, respectively.

Referring to FIG.4, the area within the dashed box corresponds to the resistor columns and equalization channels of Module 1. Using Module 1 as an example, each module area is divided into 9 units, as shown by the vertical lines in the y-direction in the figure. With reference to FIG.5, the resistor columns represented by small squares are arranged on both the front and rear sides of the battery control board for heat dissipation, and the numbers in the squares still represent the resistor column indices. An NTC 401 is disposed at the central position of the battery control board, consistent with the actual situation.

Preferably, to simplify the model, it is assumed that the 9 units are nearly identical, and it is assumed that the heat dissipation along the y-direction is minimal.

The following executes Step 301: establishing a physical field model of the battery control board as a simulation environment for battery equalization.

More specifically, the battery control board may be modeled as a differential-algebraic equation (DAE) model. Similarly to the above, the PCB board is abstracted into a plurality of partitioned units, assuming that the parameters of these units are isotropic, thereby reducing computation time and complexity.

Simultaneously, constant heat sources may be added at predetermined positions to simulate heat generation by electronic components other than the discharge resistors on the battery control board. For example, in addition to the units within the module area, heat conduction intermediate units in the x-direction may be considered, and a constant heat source may be added in the y-direction of each area, approximating the heat generation of other electronic components besides the discharge resistors. Since the experiment is conducted in a constant temperature chamber, the entire thermal field can be assumed to be in an ideal temperature source with an environment of infinite heat capacity.

Preferably, to accelerate the simulation speed, in one embodiment, Simulink/Simscape is used to establish the physical field model, wherein an outer-layer Simulink solver employs a fixed-step discrete solver, and an inner-layer Simscape solver employs a backward Euler solver.

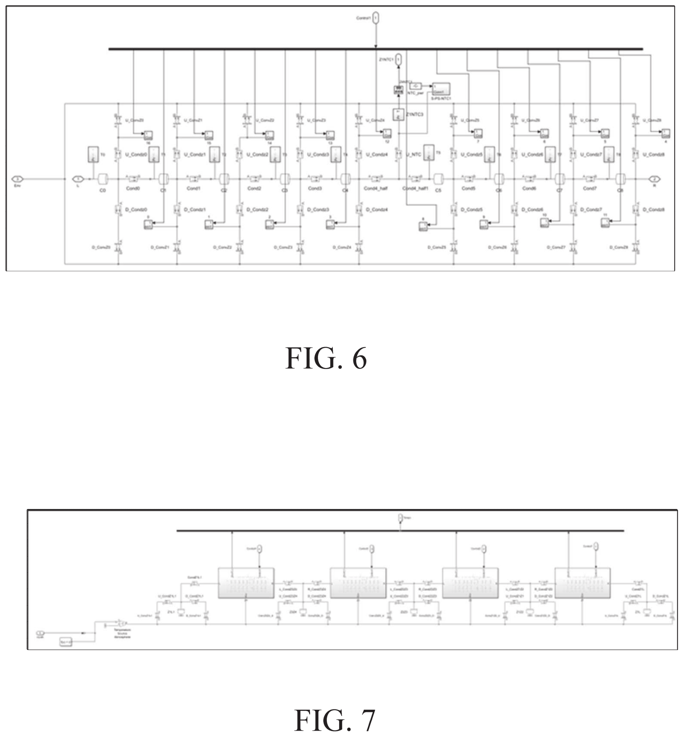

FIG.6 and FIG.7 are schematic diagrams of a thermal field model simulation for a single module area and the entire battery control board in Simulink, respectively.

For example, the simulation step size for the model used for system parameter identification may be set to 100 seconds per step, and this step size parameter may be adjusted according to actual needs. The model can generate code via Simulink Embedded Coder and be compiled into a .dll dynamic link library for subsequent invocation in other programming environments (e.g., Python).

It should be noted that the description of using Simulink/Simscape to establish the physical field model is merely exemplary. The Simulink/Simscape physical field model is a well-generalized simulation environment that can serve as an interaction platform for reinforcement learning, thus being a preferred embodiment of the present invention, but not intended to limit the scope of protection of the present invention. Other model forms, such as mechanistic models, data-driven models, surrogate models, and data-enhanced models (i.e., initializing mechanistic models in a data-driven manner), can all be applied to the battery equalization method of the present invention and should also fall within the protection scope of the present invention.

Through experiments, invoking this thermal field system in a Python environment to simulate 3500 seconds (36 sampling points, each with a 40-dimensional signal) took an average of 0.60 seconds (10 times), effectively improving computational efficiency.

Step 301 mentions that the physical field model comprises system parameters to be identified. With reference to FIG.4 and FIG.5, in this embodiment, these parameters may include, for example: heat capacity coefficient (unit: J/kg·K), heat conduction coefficient (unit: W/m·K), heat convection coefficient (unit: $W/m^2·K$), length in the x-direction (unit: m), length in the y-direction (unit: m), length in the z-direction (unit: m), external heat generation amount (unit: W), mass density (unit: $kg/m^3$), and resistor column heat generation amount (unit: W). Considering the small heterogeneity among the units, it may be assumed that each unit has the same parameters, such as the same heat capacity, thermal conductivity, or same density, etc.

After constructing the structure of the digital model, it is necessary to calibrate the model parameters to align with the real system. That is, execute Step 302: collecting experimental data of the battery control board, and identifying and determining the system parameters in the physical field model based on the experimental data.

In one embodiment, an equalization channel switching experiment may first be conducted within a constant temperature chamber, monitoring the temperature of the NTCs and collecting data.

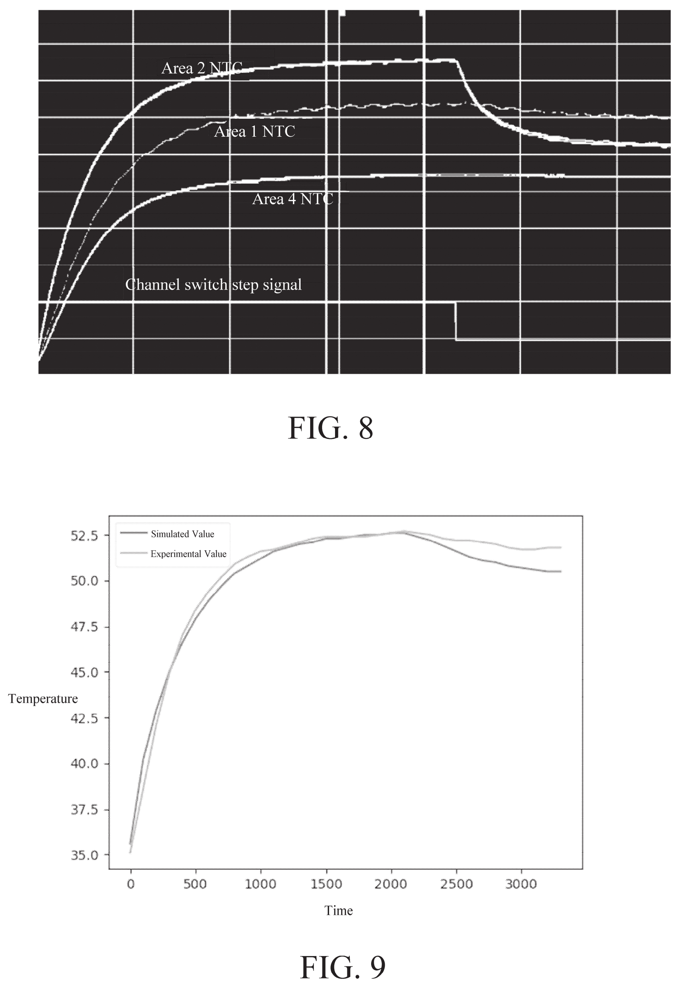

FIG.8 is a diagram of experimentally collected data according to an embodiment of the present invention.

As shown in FIG.8, in this embodiment, the area No. 3 of the battery control test board was unloaded, so only the remaining areas were operational. The horizontal axis in the figure represents time, and the vertical axis represents the temperature values of various NTCs on the experimental board. FIG.8 shows the temperature variation curves of the NTCs in three areas during the process of turning on the channel No. 16 in the area No. 2 for 2168 seconds and then turning off it. It can be observed that the turning on of the channel in the area No. 2 causes temperature changes in other areas, indicating a coupling relationship exists between the temperature variations of the multiple areas.

To reduce the search space of the search algorithm, in a preferred embodiment, the experimental data may be fitted by a combination of white-box calibration and a search algorithm to determine the values of the system parameters.

For example, except for specific parameters, other system parameters are written into the physical field model through manual measurement. The specific parameters are part of the system parameters, including the heat capacity coefficient, the heat conduction coefficient, the heat convection coefficient, the external heat generation amount, the mass density, and the length of the battery control board in a specific direction.

These other system parameters may be parameters that are easy to measure. For example, with reference to FIG.4 and FIG.5, the x-direction (long side) and z-direction (thickness) of the PCB board are determined, thus parameters in the x and z directions can be written in through manual measurement.

For the specific parameters, an approximate value range of the parameters is first provided based on material properties, and then a genetic algorithm is used to search within the parameter space for parameter values that best fit the experimental data. The specific direction is a direction with uncertain heat distribution on the battery control board.

In this embodiment, the specific parameters may be six parameters: heat capacity, thermal conductivity coefficient, heat convection coefficient, y-direction length, external heat generation amount, and mass density. Similarly, with reference to FIG.4 and FIG.5, the y-direction (short side) of the PCB board has other components and heat dissipation areas, introducing uncertainty. Therefore, the length in the y-direction is treated as a specific parameter so that this uncertainty is automatically corrected by the y-direction length variable.

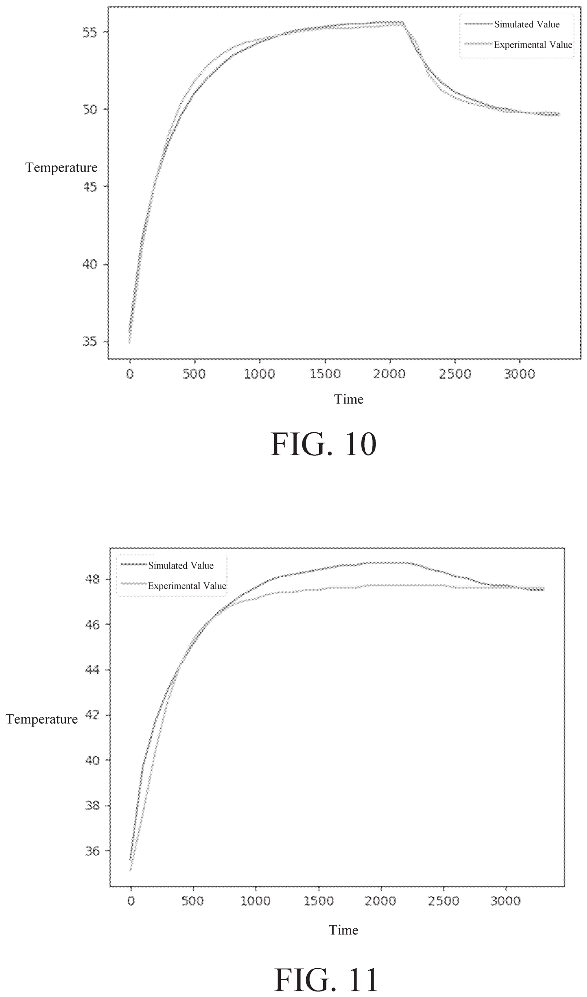

FIG.9 to FIG.11 are diagrams showing parameter calibration results of the NTC temperature curves for three module areas of the experimental board in a constant temperature chamber according to an embodiment of the present invention.

In the figures, the light-colored curves represent the experimental data of temperature changes, and the dark-colored curves represent the simulation results after calibrating the parameters of the aforementioned thermal model.

Furthermore, the utility function of the genetic algorithm may employ multidimensional Mean Squared Error (MSE). The population searches for the minimum MSE, which is the average value across all sample points in a single experiment. Expressed mathematically as:

$$\mathrm{MSE} = \frac{1}{\mathrm{n} * \mathrm{c}} \sum_{i=0}^{n} \sum_{j=0}^{c} \left(y_{ij} - \hat{y}_{ij}\right)^2$$

In the formula, y represents the experimental data, ŷ represents the simulated data, n represents the number of samples, and c represents the number of sensors.

In this embodiment, the obtained local extremum point of the MSE is 0.3866, with a dimension of $°C^2$, indicating a relatively good simulation effect.

The above describes the identification results for the experimental board within a constant temperature chamber. In another embodiment, modeling and parameter calibration may also be performed on an actual vehicle. For example, a model of the housing of the battery control board on the actual vehicle may be established, and parameters of the housing model may be determined together with the system parameters by fitting the experimental data through a combination of white-box calibration and a search algorithm.

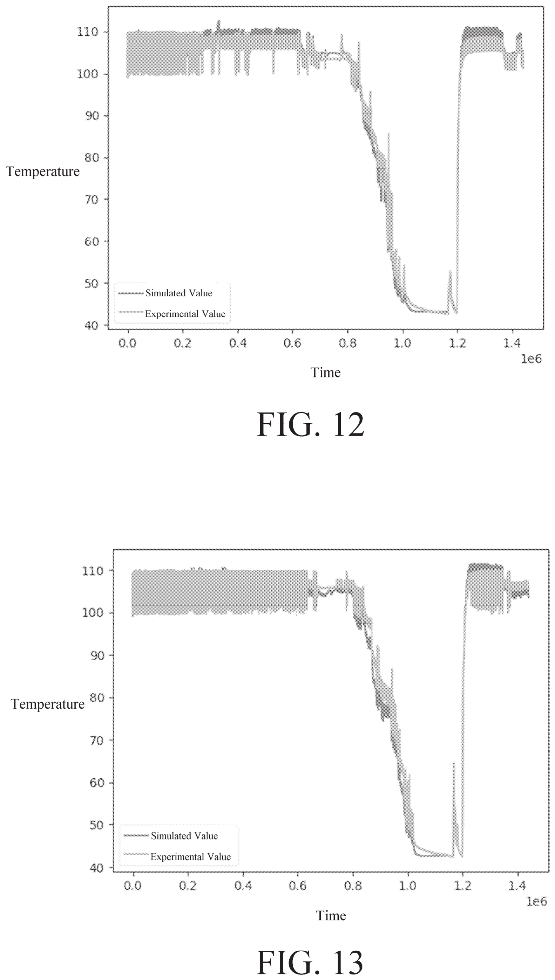

FIG.12 to FIG.14 are diagrams showing parameter calibration results of the NTC temperature curves for three module areas of the battery control board on an actual vehicle according to an embodiment of the present invention.

Similarly, the light-colored curves in the figures represent the experimental data of temperature changes, and the dark-colored curves represent the simulation results after calibrating the parameters of the aforementioned thermal model. To test the generalization capability of the mechanistic model during identification, this embodiment used only the first 10% of the data (1401 points) for training the parameters, and used the complete trajectory to test the model. The training MSE was 7.87, and the testing MSE was 10.38. The test results indicate that the mechanistic model can effectively represent the actual thermal field dynamics and can serve as a simulation environment for subsequent policy training.

After determining the system parameters, Step 303 begins: training a neural network by interacting with the simulation environment based on a reinforcement learning algorithm, in combination with a greedy rule and a preset constraint condition, and implementing battery equalization control through the equalization control signal output by the neural network.

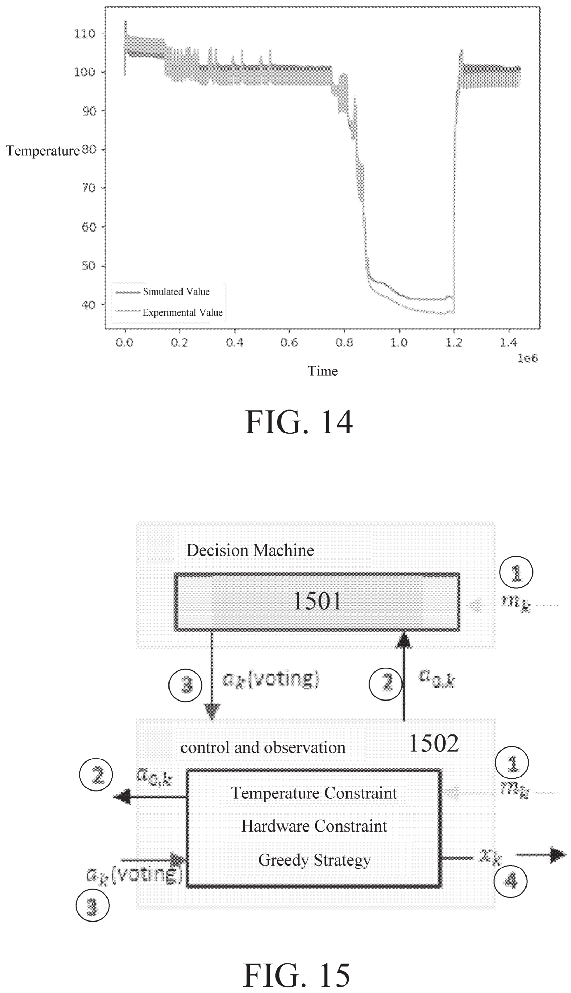

FIG.15 is a schematic diagram illustrating the principle of a battery equalization system according to an embodiment of the present invention.

Referring to FIG.15, in a preferred embodiment, Step 303 may further specifically comprise: inputting state data from the simulation environment into the neural network 1501, wherein the state data comprises a temperature sampling signal value and a cell equalization demand value. Here, the state data corresponds to the measured values of the physical quantity $m_k$ in FIG.15.

More specifically, in the embodiment of the battery control board described above, the state data may be a 40-dimensional temperature vector and a 64-dimensional equalization demand vector. Understandably, the 40-dimensional temperature vector comes from 10 temperature sampling points in each of the four areas on the aforementioned battery control board, representing the temperature signal values of the NTCs, which are continuous values. The 64-dimensional equalization demand vector corresponds to the equalization demand value of each of the 64 cells, also a continuous value with a unit of Ampere-hour (Ah).

It should be noted that in this embodiment, the neural network 1501 may be a simple fully connected multi-layer perceptron. This description of the neural network type is merely exemplary and is not intended to limit the protection scope of the present invention. Changing the neural network structure still falls within the scope of a neural network controller. For example, sub-network N1 could be used to encode the remaining capacity requiring equalization in all areas, sub-network N2 could uniformly encode the temperature of each area, and sub-network N3 could encode the NTCs of all areas. The three networks would then fuse information at the feature channel level to obtain a hidden representation of the current system state, which is finally input into the policy network and value network to output the current policy and value, respectively. Similar methods can be applied to the battery equalization method provided by the present invention and should fall within the protection scope of the present invention.

Simultaneously, the simulation environment 1502 also receives the aforementioned state data, which corresponds to the process indicated by circle 1 in FIG. 15. Then, within the simulation environment 1502, action data is output based on the greedy rule and the preset constraint condition. The action data comprises a multi-channel switch signal used for discharging in the battery control board, i.e., the process indicated by circle 2, where $a_{0,k}$ represents the action data.

The greedy rule (greedy algorithm) refers to making the choice that seems best at the present moment when solving a problem, without considering the overall optimum; the algorithm obtains a local optimal solution in a certain sense. In the battery equalization problem, the greedy rule can be used to calculate the remaining capacity of each cell, thereby deciding the on/off state of each equalization channel to meet the equalization demand.

In one embodiment, as shown in FIG.15, the preset constraint condition in the battery equalization method provided by the present invention may include temperature constraints and hardware constraints. The temperature constraints refer to the temperature constraints of the thermal model of the PCB board in the battery control board. The hardware constraints, with reference to FIG.1, can ensure that switches of adjacent discharge channels cannot be turned on simultaneously, which simplifies the computational load while satisfying the physical hardware constraints.

With reference to the simplified model of the battery control board in FIG.4 and FIG.5, there are 16 channel switches per area, resulting in a total of 64 channel switch signal values. Understandably, these switch signals can be Boolean values. However, since switches of adjacent discharge channels cannot be turned on simultaneously, a maximum of eight channels can be turned on per module area. Therefore, the action data here is a 32-dimensional vector.

Then, continuing to refer to FIG.15, in this embodiment, the neural network 1501 outputs a voting signal to the simulation environment 1502 based on the state data and the action data. The voting signal comprises a control signal for the multi-channel switches used for discharging in the battery control board, which corresponds to the process indicated by the arrow in circle 3. Here, $a_k$(voting) represents the voting signal.

Different from solutions that solely use either a neural network or a greedy rule, the battery equalization method provided by the present invention, in this embodiment, forms the voting signal $a_k$(voting) by performing an AND operation on the outputs of both. This process will be described in detail again below when introducing the specific reinforcement learning algorithm.

The present invention employs a reinforcement learning algorithm. The negative of the scalar value of the total time required for the battery to achieve equalization is taken to serve as the cumulative reward in this reinforcement learning algorithm. It is readily understandable that taking the negative of the scalar time yields a non-positive real number. The training objective of reinforcement learning is to maximize the expected return for any state, i.e., to maximize the cumulative reward, which corresponds to obtaining the maximum value of this non-positive real number. Continuing to refer to FIG.15, after the neural network 1501 outputs the voting signal, the battery equalization method provided by the present invention feeds the cumulative reward back to the neural network. The above steps are circulated to train the neural network to maximize the cumulative reward, and battery equalization control is implemented based on the final output equalization control signal $x_k$, which corresponds to the procedural step indicated by circle 4.

**In** a preferred embodiment, the reinforcement learning algorithm used in the battery equalization method provided by the present invention may be the PPO2 algorithm. PPO2 is a reinforcement learning algorithm proposed by OpenAI. It incorporates a ratio to describe the difference between new and old policies and limits the policy update step size through hyperparameters, thereby achieving relatively ideal training results.

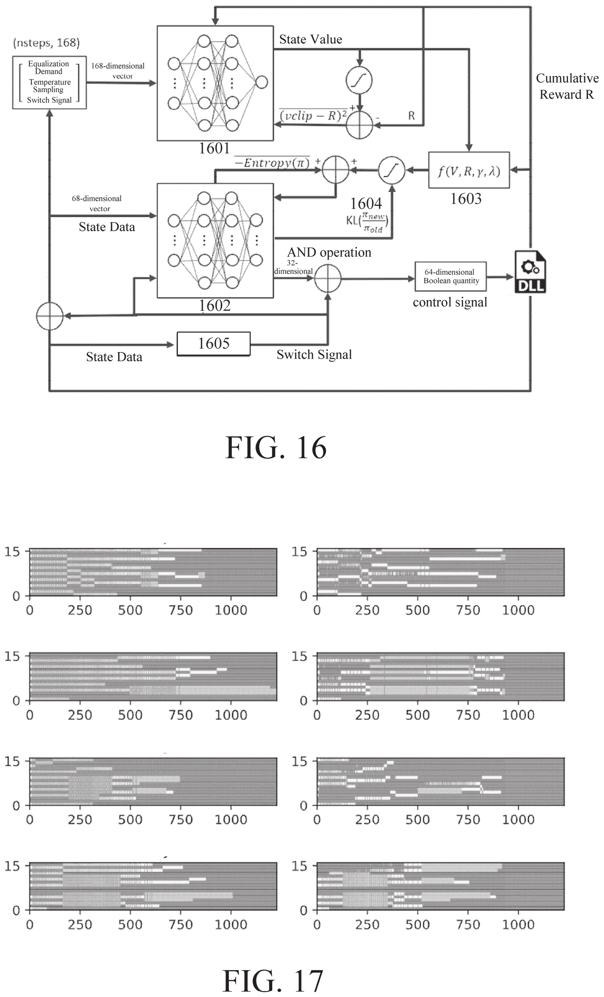

FIG.16 is a block diagram of neural network policy training according to an embodiment of the present invention.

Referring to FIG.16, the neural network comprises a policy network 1602 and a value network 1601. The process of training the neural network may further comprise: the policy network 1602 receives the state data of the simulation environment and returns a current control quantity, and records the result data of interaction with the simulation environment into an experience replay buffer; the value network 1601 performs supervised learning to estimate a reward value in the current state, wherein the reward value is the negative value of the time scalar required for battery equalization control in the current state; the policy network 1602 determines an update gradient based on an advantage estimator 1603 and an entropy bonus term 1604, wherein the advantage estimator 1603 is used to estimate the advantage of the current state by subtracting the reward value estimated by the value network 1601 from the actual return of the current control quantity, and the entropy bonus term 1604 is used to encourage exploration of different strategies; and a gradient descent method is used to update the weight of the policy network, and the updated control quantity and state data are fed back to the policy network 1602. The above steps are cycled through to gradually reduce the entropy bonus term 1604, thereby causing the policy network 1602 to converge to a deterministic policy.

It is readily understandable that the single-step reward in reinforcement learning can be the negative value of the time taken for each control step. Such a reward is dense and monotonic, allowing the neural network to easily obtain gradient information for weight updates from this reward, thereby improving algorithm efficiency.

It should be noted that the use of the PPO2 algorithm herein is merely a preferred example, intended to explain the operational steps of the battery equalization algorithm provided by the present invention more clearly, and is not meant to limit the protection scope of the present invention. In practice, other policy-based reinforcement learning algorithms, such as DDPG, TD3, SAC, TRPO, PPO, etc., may also be employed. Alternatively, other value-based reinforcement learning algorithms, such as the DQN series of variants, can also be used. These algorithms differ mainly in how they adjust the parameters of the neural network but still fall within the category of neural network controllers. Different reward designs can also be used during training. For example, with slight modifications, if it is found that $\emptyset 0$ \emptyset_0$\emptyset 0$ violates a temperature constraint or a hardware constraint, a predefined penalty can be directly added to the reward of the current time step, preventing the learned policy from generating actions that would lead to further constraint violations. Furthermore, because a future reward or penalty can influence the current step through the V-value or Q-value, such a design can prevent the learned policy from tending to generate actions that would cause constraint violations in the future. Similar algorithms can all be applied to the battery equalization method provided by the present invention and should fall within the protection scope of the present invention.

Furthermore, in a preferred embodiment, referring additionally to FIG.16, the process of training the neural network may further comprise: performing an AND operation between the control signal of the deterministic policy finally output by the policy network 1602 and the multi-channel switch signal obtained based on the greedy rule 1605 to determine the voting signal or control signal.

More specifically, the AND operation may comprise: in response to the greedy rule 1605 requiring a certain switch to be turned off, turning off said switch in the voting signal regardless of the control signal output by the policy network 1602; and in response to the greedy rule 1605 requiring a certain switch to be turned on, using the control value of said switch in the control signal output by the policy network 1602 as the control value of said switch in the final equalization control signal.

For example, based on the actual required equalization capacity, the greedy rule 1605 suggests switching of channels. Taking module area one as an example, the 16-dimensional switch vector is [0,1,0,1,0,1,0,1,0,1,0,1,0,1,0,1]. Since adjacent channels cannot be turned on simultaneously, the channel indices that can be opened are [1,3,5,7,9,11,13,15]. The output signal from the neural network for area one is [1,1,1,0,1,0,1,1]. Performing the AND operation, which is a masking operation with the allowable channel indices, the final actually turned on channel indices are [1,3,5,9,13,15]. Converting this back to a 16-dimensional Boolean vector gives [0,1,0,1,0,1,0,0,0,1,0,0,0,1,0,1].

Finally, the equalization control signal obtained after training the model is delivered to an actuator for execution, thereby achieving battery equalization control.

The following describes the validation of the effects of the battery equalization method provided by the present invention. The following data is used as the initial unbalanced condition for the experiment. The values represent the equalization demand for each cell, in Ampere-hours (Ah). Each module has 16 cells:

[[0.245,0.21,0,0.77,0.455,0.245,0.42,0.84,0.07,0.-455,0.245,0.175,0.77,0.175,0 .07,1.155],
[0.175,0,0.665,1.155,0.63,0.35,0,0.77,0.14,1.05,0-.245,0.56,0,0.42,0.7,0],
[0.28,0,0.315,0.245,0.49,0.455,0.105,0.455,0.35,-0.665,0,0.21,0.175,0.035,0.07 ,0.21],
[0.105,0.455,0.42,0.42,1.015,0.63,0,0,0,0.385,0.80-5,0.56,0.315,0.21,0.7,0.42,0.5 95]]

Experiments conducted with the above data demonstrated that the equalization time for a traditional greedy rule-based controller was 36,840 seconds, whereas the equalization time for the greedy-neural network controller provided by the present invention was 28,080 seconds, resulting in a time saving of 31.20%.

It should be noted that, in an optional embodiment, the greedy rule part within the greedy-neural network controller of the battery equalization method provided by the present invention may be discarded, and only the neural network may be used to select the best action from all possible actions. This embodiment merely enlarges the action space and belongs to the same category as the greedy-neural network control method. For example, the output of the neural network can be directly applied as a mask to the current equalization demand vector to obtain an initial channel opening vector $\emptyset_0$. Then, adjustments are made to $\emptyset_0$ based on whether the current temperature violates temperature constraints and whether the channels to be opened violate hardware constraints such as adjacent channel restrictions, transforming it into the final action output $\emptyset_1$ for the current time step.

The following elaborates on the performance comparison with reference to the drawings.

FIG.17 is a comparison diagram of the opening and closing of equalization channels during an equalization process between an embodiment of the present invention and the prior art. The left column shows the strategy of a traditional greedy rule-based controller in the prior art under a specific initial condition, while the right column shows the strategy of the greedy-neural network equalization control method provided by the present invention under the same initial condition. The four rows represent the four module areas of the PCB board, respectively. The horizontal axis in each graph represents time, and the vertical axis represents the channel index, corresponding to 16 channels (0-15) within each module. Light color represents a channel being open (Boolean value is 1), and dark color represents a channel being closed (value is 0). Eventually, all channels in both strategies will be closed, indicating the completion of equalization. Comparing the left and right columns in FIG.17, it can be observed that the battery equalization method provided by the present invention completes the equalization task in less time, achieving higher equalization efficiency.

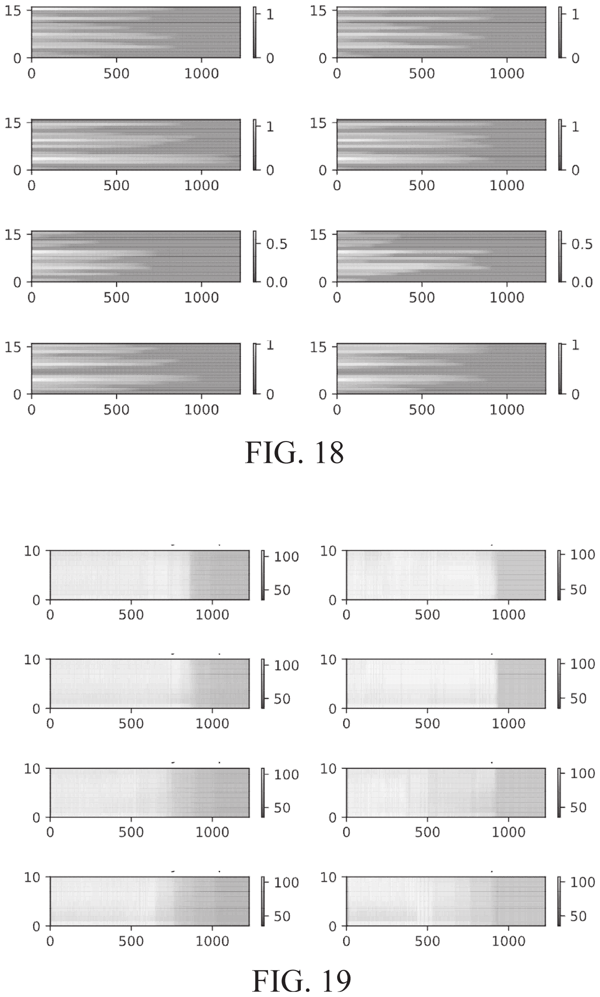

FIG.18 is a comparison diagram of the process of required capacity versus time during an equalization process between an embodiment of the present invention and the prior art. The order of the images and the meaning of the vertical axis are the same as in FIG.17. The horizontal axis represents the required equalization capacity, and the color depth represents different levels of required capacity.

FIG.19 is a comparison diagram of temperature versus time during an equalization process between an embodiment of the present invention and the prior art. The order of the images and the meaning of the horizontal axis are similar to those in FIG.18. The vertical axis represents the temperature values from 9 units and the NTC temperature sensor in each module area, and the color depth represents the temperature level.

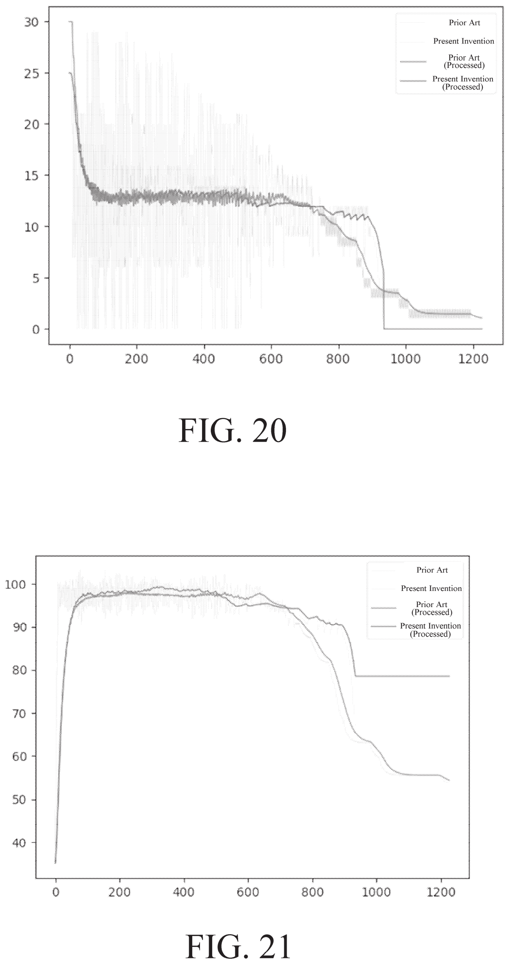

FIG.20 is a schematic diagram of the total number of opened channels versus time during an equalization process between an embodiment of the present invention and the prior art. The horizontal axis represents time, and the vertical axis represents the number of opened channels. The light-colored lines in the figure represent the raw data for the equalization process executed solely based on the greedy rule in the prior art and the process provided by the present invention combining reinforcement learning, respectively. The dark-colored lines represent curves smoothed from the two types of raw data, facilitating the observation of trends.

FIG.21 is a schematic diagram of the average temperature of the thermal field during an equalization process between an embodiment of the present invention and the prior art. Similarly, the horizontal axis represents time, and the vertical axis represents the average temperature. The figure includes both the raw data for the prior art and the method of the present invention, as well as smoothed curves for easier trend observation.

From FIG.17 to FIG.21, it can be seen that the battery equalization method provided by the present invention allows the same equalization task with identical initial demands to be completed faster. Specifically, the method provided by the present invention took 936 steps, totaling 28,080 seconds, whereas the traditional method in the prior art took 1228 steps, totaling 36,840 seconds. This demonstrates that the reinforcement learning-based battery equalization method provided by the present invention effectively improves equalization efficiency.

Although the methods are illustrated and described above as a series of acts for simplicity, it should be understood and appreciated that these methods are not limited by the order of the acts, as some acts may occur in a different order and/or concurrently with other acts according to one or more embodiments, including acts not shown and described herein but understood by those skilled in the art.

According to another aspect of the present invention, an embodiment of a reinforcement learning-based battery equalization apparatus 2200 is also provided herein.

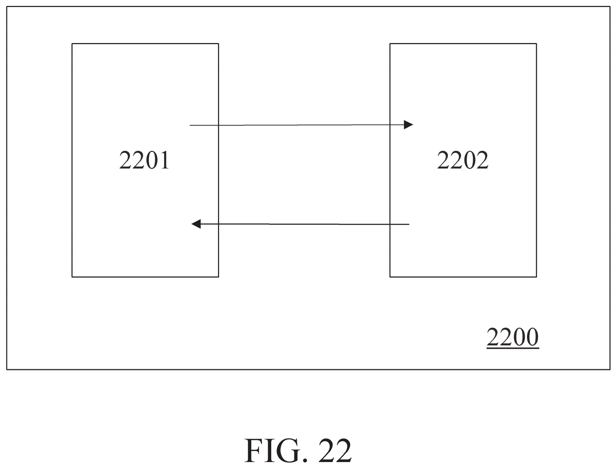

As shown in FIG.22, the aforementioned apparatus 2200 provided in this embodiment may comprise a memory 2201 and a processor 2202 coupled to the memory 2201. The processor 2202 may be configured to implement any of the reinforcement learning-based battery equalization method described above.

According to another aspect of the present invention, an embodiment of a computer storage medium is also provided herein. A computer program is stored on the computer storage medium. When the computer program is executed by a processor, the steps of any of the reinforcement learning-based battery equalization method described above can be implemented.

Those skilled in the art will further appreciate that the various illustrative logical blocks, modules, circuits, and algorithm steps described in connection with the embodiments disclosed herein may be implemented as electronic hardware, computer software, or a combination of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention. The processor described in this case may be implemented using electronic hardware, computer software, or any combination thereof. Whether such a processor is implemented as hardware or software will depend upon the particular application and design constraints imposed on the system. By way of example, the processor, any portion of the processor, or any combination of processors presented in the present disclosure may be implemented with a microprocessor, a microcontroller, a digital signal processor (DSP), a field-programmable gate array (FPGA), a programmable logic device (PLD), a state machine, gated logic, discrete hardware circuits, and other suitable processing components configured to perform the various functions described throughout this disclosure. The functionality of the processor, any portion of the processor, or any combination of processors presented in the present disclosure may be implemented with software executed by a microprocessor, microcontroller, DSP, or other suitable platform.

The steps of a method or algorithm described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, a hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor. The processor and the storage medium may reside in an Application-Specific Integrated Circuit (ASIC). The ASIC may reside in a user terminal. In the alternative, the processor and the storage medium may reside as discrete components in a user terminal.

In one or more exemplary embodiments, the described functions may be implemented in hardware, software, firmware, or any combination thereof. If implemented in software as a computer program product, the functions may be stored on or transmitted over as one or more instructions or code on a computer-readable medium. Computer-readable media includes both computer storage media and communication media, the latter including any medium that facilitates transfer of a computer program from one place to another. A storage medium may be any available medium that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Any connection is also properly termed a computer-readable medium.

For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. As used herein, a disk (disk) and a disc (disc) include a compact disc (CD), a laser disc, an optical disc, a digital versatile disc (DVD), a floppy disk, and a Blu-ray disc, where disks usually reproduce data magnetically, while discs reproduce data optically with lasers. Combinations of the above should also be included within the scope of computer-readable media.

The previous description of the disclosure is provided to enable any person skilled in the art to make or use the disclosure. Various modifications to the disclosure will be readily apparent to those skilled in the art, and the generic principles defined herein may be applied to other variations without departing from the spirit or scope of the disclosure. Thus, the disclosure is not intended to be limited to the examples and designs described herein but is to be accorded the widest scope consistent with the principles and novel features disclosed herein.

## Claims

1. A reinforcement learning-based battery equalization method, comprising:

   establishing a physical field model of a battery control board as a simulation environment for battery equalization, wherein the physical field model comprises system parameters to be identified;
   collecting experimental data of the battery control board, and identifying and determining the system parameters in the physical field model based on the experimental data; and

training a neural network by interacting with the simulation environment based on a reinforcement learning algorithm in combination with a greedy rule and a preset constraint condition, thereby realizing battery equalization control through an equalization control signal output by the neural network.

2. The battery equalization method according to claim 1, **characterized in that** said training the neural network by interacting with the simulation environment based on the reinforcement learning algorithm in combination with the greedy rule and the preset constraint condition, comprises:

inputting state data in the simulation environment into the neural network, wherein the state data comprises a temperature sampling signal value and a cell balancing demand value; and outputting action data based on the greedy rule and the preset constraint condition in the simulation environment, wherein the action data comprises a multi-channel switch signal used for discharging in the battery control board; and the neural network outputting a voting signal to the simulation environment based on the state data and the action data, the voting signal comprising a control signal for the multi-channel switches used for discharging in the battery control board; and taking a negative value of a total time scalar required for the battery to achieve equalization as a cumulative reward in the reinforcement learning algorithm and feeding the cumulative reward to the neural network, circulating above steps to train the neural network to maximize the cumulative reward, and performing battery equalization control based on a finally output equalization control signal.

3. The battery equalization method according to claim 2, **characterized in that** said the reinforcement learning algorithm comprises a PPO2 algorithm, and the neural network comprises a policy network and a value network, wherein the training the neural network by interacting with the simulation environment based on the reinforcement learning algorithm in combination with the greedy rule and the preset constraint condition, further comprises:

the policy network receiving the state data of the simulation environment and returning a current control quantity, and recording result data of the interaction with the simulation environment into the experience replay buffer; the value network performing supervised learning to estimate a reward value in the current state, the reward value being a negative value of the time scalar required for battery equalization control in the current state; the policy network determining an update gradient based on an advantage estimator and an entropy bonus term, the advantage estimator being used for estimating an advantage of the current state by subtracting the reward value estimated by the value network from the actual return of the current control quantity, the entropy bonus term being used for encouraging exploration of different strategies; and updating the weight of the policy network by using a gradient descent method, and feeding back the updated control quantity and state data to the policy network, cycling through above steps to gradually reduce the entropy bonus term, so that the policy network converges to a deterministic policy.

4. The battery equalization method according to claim 3, **characterized in that** said training the neural network by interacting with the simulation environment based on the reinforcement learning algorithm in combination with the greedy rule and the preset constraint condition, further comprises:
performing an AND operation between the control signal of the deterministic policy finally output by the policy network and the multi-channel switch signal obtained based on the greedy rule, to determine the voting signal, wherein the AND operation comprises:

in response to requiring a certain switch to be turned off by the greedy rule, turning off the certain switch in the voting signal regardless of the control signal output by the policy network; and in response to requiring the certain switch to be turned on by the greedy rule, using a control value of the certain switch in the control signal output by the policy network as a control value of the certain switch in the final equalization control signal.

5. The battery equalization method according to claim 1, **characterized in that**, the greedy rule comprises calculation of a cell remaining capacity, and the preset constraint condition comprises temperature constraints of a thermal model of a PCB in the battery control board.

6. The battery equalization method according to claim 5, **characterized in that**, the battery comprises a plurality of groups of cells connected in series, each of said cells corresponds to a discharge channel controlled by a switch, and the preset constraint condition further comprises: a hardware constraint ensuring that switches of adjacent discharge channels cannot be turned on simultaneously.

**7.** The battery equalization method according to claim 1, **characterized in that** said establishing the physical field model of the battery control board as the simulation environment for battery equalization, comprises:

modeling the battery control board as a differential-algebraic equation model, abstracting a PCB board into a plurality of partitioned units, and assuming that parameters of said a plurality of partitioned units are isotropic; and adding constant heat sources at predetermined positions to simulate heat generation by electronic components other than discharge resistors on the battery control board.

**8.** The battery equalization method according to claim 7, **characterized in that** said establishing the physical field model of the battery control board as the simulation environment for battery equalization, further comprises:
using Simulink/Simscape to establish the physical field model, wherein an outer-layer Simulink solver employs a fixed-step discrete solver, and an inner-layer Simscape solver employs a backward Euler solver.

**9.** The battery equalization method according to claim 1, **characterized in that** said identifying and determining the system parameters in the physical field model based on the experimental data, comprises:
fitting the experimental data by a white-box calibration in combination with a search algorithm to determine values of the system parameters.

**10.** The battery equalization method according to claim 9, **characterized in that**, the system parameters comprise a heat capacity coefficient, a heat conduction coefficient, a heat convection coefficient, respective lengths of the battery control board, an external heat generation amount, a mass density, and a resistor heat generation amount, the experimental data comprises experimental data of the battery control board in a constant temperature chamber, said fitting the experimental data by the white-box calibration in combination with the search algorithm to determine values of the system parameters, comprises:

except for specific parameters, writing other system parameters into the physical field model through manual measurement, wherein the specific parameters are part of the system parameters comprising the heat capacity coefficient, the heat conduction coefficient, the heat convection coefficient, the external heat generation amount, the mass density, and the length of the battery control board in a specific direction; and

for the specific parameters, first providing an approximate value range of the parameters based on material properties, and then searching for parameter values that best fit the experimental data within a parameter space by a genetic algorithm, wherein the specific direction is a direction with uncertain heat distribution on the battery control board.

**11.** The battery equalization method according to claim 10, **characterized in that**, the experimental data further comprises experimental data of the battery control board on an actual vehicle, said identifying and determining the system parameters in the physical field model based on the experimental data, further comprises:
establishing a model of a housing of the battery control board on the actual vehicle, and selecting parameters of the housing model to be determined together with the system parameters by fitting the experimental data through white-box calibration and the search algorithm.

**12.** The battery equalization method according to claim 2, **characterized in that**, the battery comprises a number of $a$ groups of cells connected in series, said number of $a$ groups of cells are divided into a number of b modules with identical structures, each module is provided with ( $\frac{a}{b}$ ) discharge channels corresponding one-to-one to the cells, wherein $a, b,$ and ( $\frac{a}{b}$ ) are positive integers; when a discharge channel is turned on, the corresponding cell discharges through a resistor connected in parallel within the discharge channel; and temperature sensors are provided on both front and rear sides at a central position of the battery control board of each of said modules.

**13.** The battery equalization method according to claim 12, **characterized in that**, the state data comprises a $(b \cdot c)$ -dimensional temperature vector and an $a$-dimensional equalization demand vector, wherein the $(b \cdot c)$ -dimensional temperature vector comprises a number of c sets of temperature sampling signal values from the temperature sensors in said number of b modules, and each equalization demand vector corresponds to an equalization demand value of one cell, the unit of the equalization demand value being Ampere-hour (Ah),

the action data comprises Boolean values of an $a$-dimensional switch signal, representing switching of the discharge channels corresponding one-to-one to the number of $a$ groups of cells,

the voting signal comprises an $\left(\frac{a}{2b}\right)$-dimensional switch control signal to satisfy a hardware constraint condition ensuring that switches of adjacent discharge channels cannot be turned on simultaneously, wherein $a, b, c,$ and ( $\frac{a}{2b}$ ) are positive integers.

14. A reinforcement learning-based battery equalization apparatus, comprises:

A memory; and
a processor coupled to the memory, wherein the processor is configured to execute the reinforcement learning-based battery equalization method according to any one of claims 1 to 13.

15. A computer-readable medium, having stored thereon a computer program, **characterized in that** the computer program, when executed by a processor, implements the reinforcement learning-based battery equalization method according to any one of claims 1 to 13.

FIG. 1

FIG. 2

Establishing a physical field model of a battery control board as a simulation environment for battery equalization, wherein the physical field model comprises system parameters to be identified

301

Collecting experimental data of the battery control board, and identifying and determining the system parameters in the physical field model based on the experimental data;

302

training a neural network by interacting with the simulation environment based on a reinforcement learning algorithm, in combination with a greedy rule and a preset constraint condition , and implementing battery equalization control through the equalization control signal output by the neural network.

303

300

FIG. 3

401

FIG. 4

401

16 15 14 13 12 7 6 5 4

0 1 2 3 8 9 10 11

401

FIG. 5

FIG. 6

FIG. 7

FIG. 8

FIG. 9

FIG. 10

FIG. 11

FIG. 12

FIG. 13

FIG. 14

FIG. 15

FIG. 16

FIG. 17

FIG. 18

FIG. 19

FIG. 20

FIG. 21

2201

2202

2200

FIG. 22

## INTERNATIONAL SEARCH REPORT

| International application No. |
| --- |
| **PCT/CN2023/104466** |

| A. | CLASSIFICATION OF SUBJECT MATTER |
| --- | --- |

B60L58/22(2019.01)i

According to International Patent Classification (IPC) or to both national classification and IPC

| B. | FIELDS SEARCHED |
| --- | --- |

Minimum documentation searched (classification system followed by classification symbols)

IPC:B60L

Documentation searched other than minimum documentation to the extent that such documents are included in the fields searched

Electronic data base consulted during the international search (name of data base and, where practicable, search terms used)

CNTXT: ENTXTC; ENTXT; VEN; CNKI: 联合汽车电子有限公司, 杨志斐, 柯希春, 刘创, 陆唯佳, 张晓东, 底翔, 强化学习, 机器学习, 电池, 均衡, 平衡, 仿真, 模拟, 建模, 模型, 神经网络, 贪婪, 贪心, 约束, 温度, 电芯, 奖励, 放电, 策略网络, 价值网络, battery, equalization, balanc+, reinforcement, learning, model, simulation, parameter+, data, greedy, algorithm, constraint, neural, network, control+

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | 叶泽雨等 (YE, Zeyu et al.). "基于多智能体强化学习的可重构电池组串并联均衡方法 (Reconfigurable Battery Series and Parallel Equalization Method Based on Multi Agent Reinforcement Learning)" 实验技术与管理 (Experimental Technology and Management), Vol. 39, No. 6, 13 June 2022 (2022-06-13), ISSN: 1002-4956, pages 68-72 | 1, 5-9, 14-15 |
| A | CN 113964897 A (INSTITUTE OF ELECTRICAL ENGINEERING, CHINESE ACADEMY OF SCIENCES) 21 January 2022 (2022-01-21) entire document | 1-15 |
| A | CN 104617623 A (WUHAN UNIVERSITY OF TECHNOLOGY) 13 May 2015 (2015-05-13) entire document | 1-15 |
| A | CN 114670710 A (BEIJING ELECTRIC VEHICLE CO., LTD.) 28 June 2022 (2022-06-28) entire document | 1-15 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **20 November 2023** | **13 December 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| | International application No. |
|---|---|
| | **PCT/CN2023/104466** |

### C. DOCUMENTS CONSIDERED TO BE RELEVANT

| Category* | Citation of document, with indication, where appropriate, of the relevant passages | Relevant to claim No. |
|---|---|---|
| A | CN 110525269 A (JILIN UNIVERSITY) 03 December 2019 (2019-12-03)<br>entire document | 1-15 |
| A | CN 111246438 A (NANJING UNIVERSITY OF POSTS AND TELECOMMUNICATIONS)<br>05 June 2020 (2020-06-05)<br>entire document | 1-15 |
| A | CN 112216883 A (CHANG'AN UNIVERSITY) 12 January 2021 (2021-01-12)<br>entire document | 1-15 |
| A | CN 112234673 A (CHANG'AN UNIVERSITY) 15 January 2021 (2021-01-15)<br>entire document | 1-15 |
| A | CN 113511082 A (SHENZHEN INSTITUTE OF ADVANCED TECHNOLOGY) 19 October<br>2021 (2021-10-19)<br>entire document | 1-15 |
| A | US 2022057451 A1 (CARNEGIE MELLON UNIVERSITY) 24 February 2022 (2022-02-24)<br>entire document | 1-15 |

Form PCT/ISA/210 (second sheet) (July 2022)

**INTERNATIONAL SEARCH REPORT**
Information on patent family members

International application No.

**PCT/CN2023/104466**

| Patent document cited in search report | | | Publication date (day/month/year) | Patent family member(s) | | | Publication date (day/month/year) |
|---|---|---|---|---|---|---|---|
| CN | 113964897 | A | 21 January 2022 | None | | | |
| CN | 104617623 | A | 13 May 2015 | None | | | |
| CN | 114670710 | A | 28 June 2022 | None | | | |
| CN | 110525269 | A | 03 December 2019 | None | | | |
| CN | 111246438 | A | 05 June 2020 | None | | | |
| CN | 112216883 | A | 12 January 2021 | None | | | |
| CN | 112234673 | A | 15 January 2021 | None | | | |
| CN | 113511082 | A | 19 October 2021 | WO | 2022252559 | A1 | 08 December 2022 |
| US | 2022057451 | A1 | 24 February 2022 | None | | | |

Form PCT/ISA/210 (patent family annex) (July 2022)